# EUROPEAN PATENT APPLICATION

(11) **EP 1 684 226 A1**
(43) Date of publication of application: **26.07.2006**
(21) Application number: 05113026.8
(22) Date of filing: 28.12.2005
(51) Int. Cl.: G06Q 10/00

(54) **Task oriented user interface model for document centric software applications**

(30) Priority: 24.01.2005 US 41631
(71) Applicant: Microsoft Corporation, Redmond WA 98052 (US)
(72) Inventor: Bala, Aravind, 98052, Redmond (US)
(74) Representative: Zimmer, Franz-Josef

(57) **Abstract**

The subject invention relates to systems and methods that utilize a task oriented user interface with a document centric software application. The task oriented user interface aims to be more discoverable than conventional interfaces and better at performing unknown tasks without sacrificing the efficiency of performing known tasks The user interface facilitates searching and/or browsing of tasks that can be carried out *via* utilizing the document centric software application.

## Description

### TECHNICAL FIELD

The subject invention generally relates to user interfaces, and more particularly to systems and methods that employ task oriented user interfaces utilized in connection with document centric software applications.

### BACKGROUND OF THE INVENTION

Various user interfaces have been developed to facilitate computer user interaction with applications. Computer programs can provide a user interface to facilitate data entry, to enable viewing output on a display screen, as well as to manipulate or rearrange data, for example. The user interface can be associated with an application program or operating system shell, which may be running locally on a user's machine and/or remotely, such as in a distributed computing system or over the Internet. User interfaces can be employed with various types of applications such as, for example, document centric software applications, database centric applications, *etc*. A document centric software application temporarily transforms a document to enable viewing and/or operations by the user.

User interfaces typically employed in connection with document centric software applications are tool and feature based. Thus, manipulation of a document *via* the application requires a user to access functionality located in menus, toolbars, panes, dialogs, *etc.* A shortcoming of conventional systems is that features that the user desires to employ are categorized inconsistently across menus and toolbars. For example, menus and toolbars often include "File," "Tools" and "Insert" from which the user can select; however, "File" and "Tools" are nouns, while "Insert" is a verb.

Additionally, a user employing such user interfaces must assemble a number of features and/or tools to accomplish a desired task. By way of illustration, to change a macro security in some word processing applications, the user has to select an item from a menu, then select an item from a nested submenu, then choose a particular tab within a dialog box, and finally select a certain button. Consequently, many users encounter a variety of difficulties associated with attempting to complete various actions. For example, the user may not know where to look for a feature. Moreover, when the user browses through the menus and dialogs, there can be several other tools and/or features from which to choose and it may not be clear which to select. Additionally, many user interface tools and/or features are disabled based on context. For example, to manipulate a table located in a document, the table needs to be selected to enable the related tools and/or features. User interface tools and/or features can also be disabled if certain conditions are not met such as, for example, the feature is not installed, only the administrator is permitted to utilize the feature, *etc.* Also, in complex software applications, it is typically difficult to add features due to screen real-estate limitations.

Moreover, conventional user interfaces do not provide functionality for enabling discoverability of actions that an application can effectuate. For example, users typically browse menus, dialog boxes, *etc.* while attempting to identify features of the application; however, users encounter difficulties with discoverability employing such techniques and thus, are unable to discover actions, task, tools, features, *etc*. that the application can accomplish. Additionally, typical user interfaces are inefficient at performing unknown tasks with an application. For example, the user may know what they desire to accomplish with an application, but they may not know how to accomplish such an action. Conventionally, users had to utilize "Help" features of an application, ask another user, *etc*. However, users seldom utilize "Help" and oftentimes do not desire to learn a sequence of tool and/or feature selection necessary to effectuate a rarely employed task. Accordingly, there is a need to for improved user interfaces.

### SUMMARY OF THE INVENTION

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The subject invention relates to systems and methods that utilize a task oriented user interface with a document centric software application. The task oriented user interface aims to be more discoverable than conventional interfaces and better at performing unknown tasks without sacrificing the efficiency of performing known tasks. The user interface facilitates searching and/or browsing of tasks that can be carried out *via* utilizing the document centric software application.

According to an aspect of the subject invention, a system is provided that facilitates utilizing a document centric software application. The system includes an interface component that receives an input from a user and a task navigation component with a hierarchical based index of tasks that are capable of being accomplished with the document centric software application, wherein the input is utilized to traverse the index and the tasks are executed directly from the index. The navigation component can comprise a browse component and/or a search component. In one exemplary aspect, the system can include a context analyzer that evaluates a current context.

Pursuant to another aspect of the subject invention, a method is provided that facilitates discovering tasks that an application is capable of performing. The method can include receiving an input from a user, navigating a hierarchy of tasks associated with a document centric software application based in part on the user input, wherein the tasks are directly executed from the hierarchy, and displaying a selectable subset of tasks to the user.

According to another exemplary aspect of the subject invention, a system can be provided for determining tasks to execute related to a document centric software application. The system can include means for generating a hierarchy of tasks capable of being accomplished related to at least one of a document and a document centric software application, means for navigating the hierarchy of tasks, and means for directly executing a selected task from the hierarchy of tasks.

Additionally, according to another aspect of the subject invention, a system is provided that enables user interaction with a document. The system can include a document centric software application that facilitates at least one of viewing and modifying a document, and a task oriented user interface that enables a user to select a task that is performed *via* the application, the task is associated with at least one of the document and the application.

The following description and the annexed drawings set forth in detail certain illustrative aspects of the invention. These aspects are indicative, however, of but a few of the various ways in which the principles of the invention may be employed and the subject invention is intended to include all such aspects and their equivalents. Other advantages and novel features of the invention will become apparent from the following detailed description of the invention when considered in conjunction with the drawings.

### BRIEF DESCRIPTION OF THE DRAWINGS

Fig. 1 illustrates a block diagram of a system that facilitates navigating tasks in accordance with an aspect of the subject invention.

Fig. 2 illustrates a block diagram of a system that facilitates navigating a hierarchy of tasks in accordance with an aspect of the subject invention.

Fig. 3 illustrates a block diagram of a system that facilitates presenting tasks to a user in accordance with an aspect of the subject invention.

Fig. 4 illustrates a block diagram of a system that facilitates identifying tasks that can be effectuated in accordance with an aspect of the subject invention.

Fig. 5 illustrates a block diagram of a system that facilitates adding tasks to a hierarchy of tasks that can be performed with an application in accordance with an aspect of the subject invention.

Fig. 6 illustrates a block diagram of a system that navigates and/or performs tasks in accordance with an aspect of the subject invention.

Fig. 7 illustrates a system that facilitates discovering and/or performing tasks in accordance with an aspect of the subject invention.

Fig. 8 illustrates a flow chart of an exemplary methodology that facilitates discovering and/or executing tasks in accordance with an aspect of the subject invention.

Fig. 9 illustrates a flow chart of an exemplary methodology that facilitates presenting and/or performing tasks in accordance with an aspect of the subject invention.

Fig. 10 illustrates a flow chart of an exemplary methodology that facilitates navigating and/or executing tasks in accordance with an aspect of the subject invention.

Fig. 11 is a screen shot of a task oriented user interface utilized in connection with a document centric software application in accordance with an aspect of the subject invention.

Fig. 12 is a screen shot of a task oriented user interface that facilitates navigating a hierarchy of tasks in a discoverable way in accordance with an aspect of the subject invention.

Fig. 13 is a screen shot of another task oriented user interface that facilitates navigating a hierarchy of tasks in a discoverable way in accordance with an aspect of the subject invention.

Fig. 14 is a screen shot of a task oriented user interface in accordance with an aspect of the subject invention.

Fig. 15 is a screen shot of another task oriented user interface in accordance with an aspect of the subject invention.

Fig. 16 illustrates an exemplary networking environment, wherein the novel aspects of the subject invention can be employed.

Fig. 17 illustrates an exemplary operating environment, wherein the novel aspects of the subject invention can be employed.

### DESCRIPTION OF THE INVENTION

The subject invention relates to systems and methods that utilize a task oriented user interface with a document centric software application. The task oriented user interface aims to be more discoverable than conventional interfaces and better at performing unknown tasks without sacrificing the efficiency of performing known tasks. The user interface facilitates searching and/or browsing of tasks that can be carried out *via* utilizing the document centric software application.

As utilized in this application, terms "component," "system," and the like are intended to refer to a computer-related entity, either hardware, software (*e.g.*, in execution), and/or firmware. For example, a component can be a process running on a processor, a processor, an object, an executable, a program, and/or a computer. By way of illustration, both an application running on a server and the server can be a component. One or more components can reside within a process and a component can be localized on one computer and/or distributed between two or more computers.

The subject invention is described with reference to the drawings, wherein like reference numerals are used to refer to like elements throughout. In the following description, for purposes of explanation, numerous specific details are set forth in order to provide a thorough understanding of the subject invention. It may be evident, however, that the subject invention may be practiced without these specific details. In other instances, well-known structures and devices are shown in block diagram form in order to facilitate describing the subject invention.

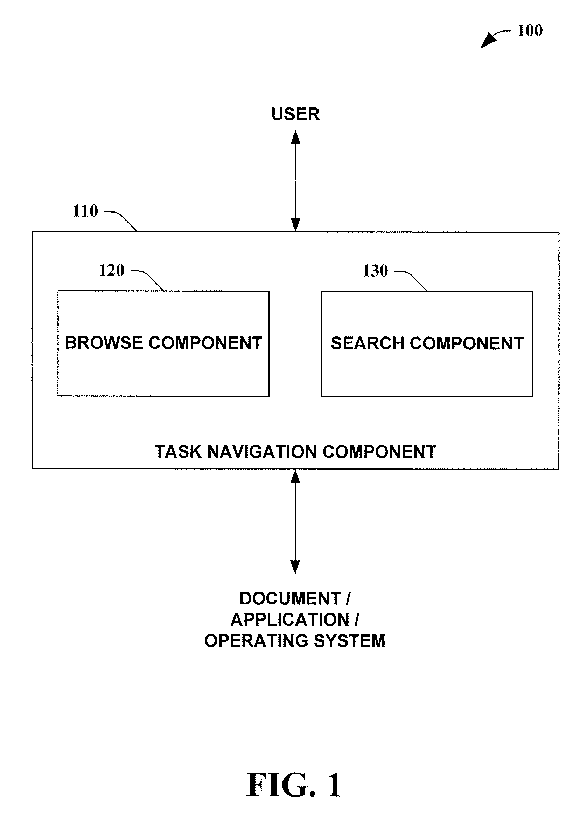

Fig. 1 illustrates a system 100 that facilitates navigating through tasks according to an aspect of the subject invention. The system 100 comprises a task navigation component 110, which can be utilized by a user to navigate through the tasks. Additionally, by way of illustration, a user can employ an application that can utilize the navigation component 110 such as a screen reader application for a user with impaired vision. A user can interact with the task navigation component 110, for example, with a mouse, keyboard, speech, touch screen display, sensor (*e.g.*, sensor that detects body movement, proximity, temperature, touch, ... ), *etc.* The task navigation component 110 is further associated with a document, an application, an operating system, *etc*. which can perform tasks. The task navigation component 110 is scalable and, for example, can be associated with applications that support thousands of tasks. The task navigation component 110 comprises a browse component 120 and a search component 130. The browse component 120 can be utilized to browse through a hierarchy of tasks (*e.g.*, hierarchical based index of tasks) associated with a document, application (*e.g.*, document centric software application, ...), operating system, *etc.* The search component 130 can be employed by a user and/or an application to search for a task.

A task is an action, modification, *etc.* that can be performed in an application. For example, a task can be bolding text or creating a business plan. Also, a task can be something that the user would desire to accomplish with the application and can dialog with the user for further information. Additionally, a task can complete a portion of all of the actions involved with the task and can query the user for clarification and further information to finish the remainder of the actions. Furthermore, a task can be launched in any context, which differs from conventional tools and/or features, which are only useful when certain contextual conditions are satisfied. By way of illustration, a "Split Cells" tool associated with some conventional word processing applications is only active when a user has selected a table. On the contrary, a "Split Cells in a Table" task utilized in the subject invention can be executed without previously selecting a table. Instead, the task can facilitate instructing the user to select a cell in a table if there is a table in the document. Also, assuming that a table is not present in the document, the task can facilitate creating a table and/or querying the user whether she wishes to create a table, and then can proceed with the remainder of the task. According to an aspect of the subject invention, the tasks can be organized into a hierarchy (*e.g.*, hierarchical based index of tasks). A task within the hierarchy, for example, can be directly executed upon a user selecting the particular task.

The task navigation component 110 can be utilized in connection with a document centric software application. By way of illustration, the task navigation component 110 can be employed by a user to facilitate discovering tasks that can be performed with the document centric software application. Document centric software applications can be software run on a client, software executed from a server, or a combination of both. A document centric software application temporarily transforms a document(s) to enable a user to view and/or perform operations upon the document. A document centric software application can be, for example, a productivity application (*e.g.*, a word processor, a presentation application, a spreadsheet application, a desktop publishing and web content creation application, ...), an imaging application, a development application, *etc*. The type of application allows for a user to view and/or modify an associated type of document(s). Thus, for example, a word processor can be utilized to view and/or modify a text document (*e.g.*, .doc file, ...). A document is a piece of data that can have several views. For illustration, an html document can be viewed as a web page, as plain text, as a series of ones and zeros directly from a hard drive, *etc*. Additionally, a document is discrete from other data. Any type of document (and associated document centric software application) can be utilized in connection with the subject invention including, but not limited to, spreadsheets, text, images, notes, diagrams, *etc*.

The browse component 120 provides a hierarchy of tasks that can be performed with the application(s), operating system(s), document(s), *etc*. and a user and/or application can browse the hierarchy of tasks. For example, a user can browse the hierarchy to discover tasks that can be accomplished, select a desired task, *etc.*
According to an exemplary aspect of the subject invention, the browse component 120 can be an application portal, whereby functionality of the portal is arranged into a hierarchy. Thus, navigation utilizing the browse component 120 can be similar to navigating with a website. For example, the browse component 120 can provide a back button, a forward button, *etc.*, which can facilitate traversing to different nodes within the hierarchy. Additionally or alternatively, the browse component 120 can provide hyperlinks that a user can select with a mouse, keyboard, touch panel, *etc.* that enable traversing through the hierarchy. Furthermore, a user can utilize speech to navigate through the hierarchy. According to another aspect of the subject invention, the hierarchy of the browse component 120 can allow the same task to appear at a plurality of locations within the hierarchy. The subject invention contemplates that the hierarchy can be generated at runtime (*e.g.*, by the browse component 120, application, operating system, ...), at the time of manufacturing the application (*e.g.*, document centric software application), and/or at the time of installation of the application (or any application) or the operating system. Additionally, the hierarchy of tasks can be obtained by the browse component 120 at runtime, installation, or any other time. Moreover, the hierarchy can be updated based on user preference, installed applications, manufacturer modifications (*e.g.*, received *via* the Internet), *etc.* It is to be appreciated that the hierarchy of tasks can be a tree based hierarchy; however, the subject invention is not so limited.

The browse component 120 can additionally be utilized to discover tasks that can be accomplished with an application, operating system, document, *etc*. According to an aspect, the browse component 120 can display a tooltip that describes the types of tasks that exist down a path within the hierarchy. For example, if a user moves a cursor over an element associated with the browse component 120 on a display, the tooltip can be displayed alerting the user as to the contents within that particular segment of the hierarchy.

The search component 130 facilitates searching for tasks that can be executed *via* a document centric software application, operating system, document, *etc*. The search component 130 can search for a task from a plurality of task. In an exemplary aspect, the search component 130 can search for a task from all of the tasks that can be performed with an application, operating system, document, *etc*. Alternatively, the search component 130 can facilitate searching within a subset of the tasks that can be executed. The searching component 130 can utilize keyword searching, natural language searching, speech, *etc*. According to an aspect of the subject invention, the search component 130 can facilitate searching the tasks located within the hierarchy of tasks (*e.g.*, hierarchical based index of tasks).

The subject invention provides for advantages compared to conventional user interfaces. In particular, the subject user interface enhances discoverability of tasks that can be facilitated utilizing an application (*e.g.*, document centric software application). Additionally, the system 100 enables a user to efficiently accomplish a task that she does not know how to effectuate and thus, mitigates the need to use a "Help" feature of an application. Moreover, the subject invention enables efficient execution of task that the user knows how to achieve. Pursuant to an exemplary aspect of the subject invention, toolbars and/or menus can be provided with the tools and/or features most commonly utilized by users. For example, the tools and/or features included can be personalized based on user preferences, usage, *etc*.

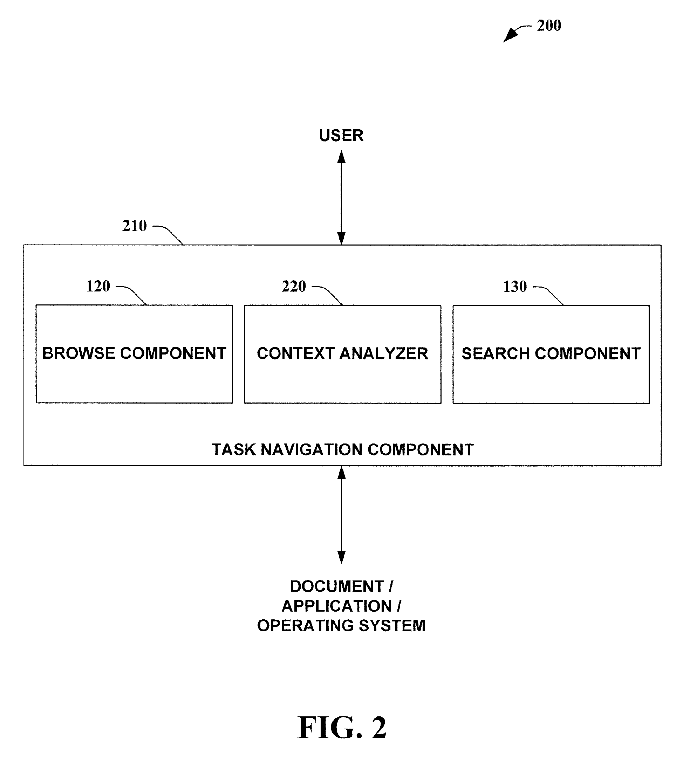

With reference to Fig. 2, illustrated is a system 200 that facilitates navigating a hierarchy of tasks that can be accomplished with an application (*e.g.*, document centric software application), operating system, document, *etc.* The task can be related to the application, operating system, and/or a document. For example, the task can be to insert footnotes, italicize text, *etc*., which operate on the document. According to another illustration, the task can operate on the application, such as a task to create a new macro. The system 200 includes a task navigation component 210 that enables a user and/or application to navigate the tasks associated with the document, application (*e.g.*, document centric software application), operating system, *etc*. Moreover, the navigation component 210 comprises the browse component 120, the search component 130, and a context analyzer 220. The browse component 120 enables a user and/or application to traverse a hierarchy of tasks that are capable of being performed. Additionally, the search component 130 facilitates searching for a task utilizing, for example, keyword searching, natural language searching, speech, *etc.*

The context analyzer 220 can be employed to evaluate a current context associated with the document(s), application(s), operating system(s), *etc.* For example, the context analyzer 220 can determine the identity of the user and/or application utilizing a document centric software application *via* the task navigation component 210, identify the application(s) (*e.g.*, document centric software application(s)) that is being employed, determine whether a particular object within the document has been selected, *etc.* For example, the context analyzer 220 can determine that a presentation application is being employed. Additionally, the context analyzer 220 can identify that an object such as a table, slide, image, *etc.* is selected. The context analyzer 220 can further evaluate the preferences of the user who is utilizing the task navigation component 210.

Additionally or alternatively, the context analyzer 220 can present tasks that are relevant for a particular context. Thus, the context analyzer 220 can display tasks that are related to a presentation application that a user is employing, for example. In an exemplary embodiment, if it is determined that a table within a document is selected, the context analyzer 220 can display tasks that are relevant to the table.

According to an aspect of the subject invention, the context analyzer 220 can be employed in conjunction with the browse component 120 such that the context analyzer 220 determines the current context and provides the context or information relevant to the context to the browse component 120. Thereafter, the browse component 120 can present the user with a hierarchy that includes a subset of the total tasks that can be performed. Alternatively, the browse component 120 can display a particular location within the hierarchy and/or tasks related to such location to a user that is relevant to the current context, and thereby enable the user to traverse from such a location *via* selecting hyperlinks, utilizing back and/or forward buttons, *etc*.

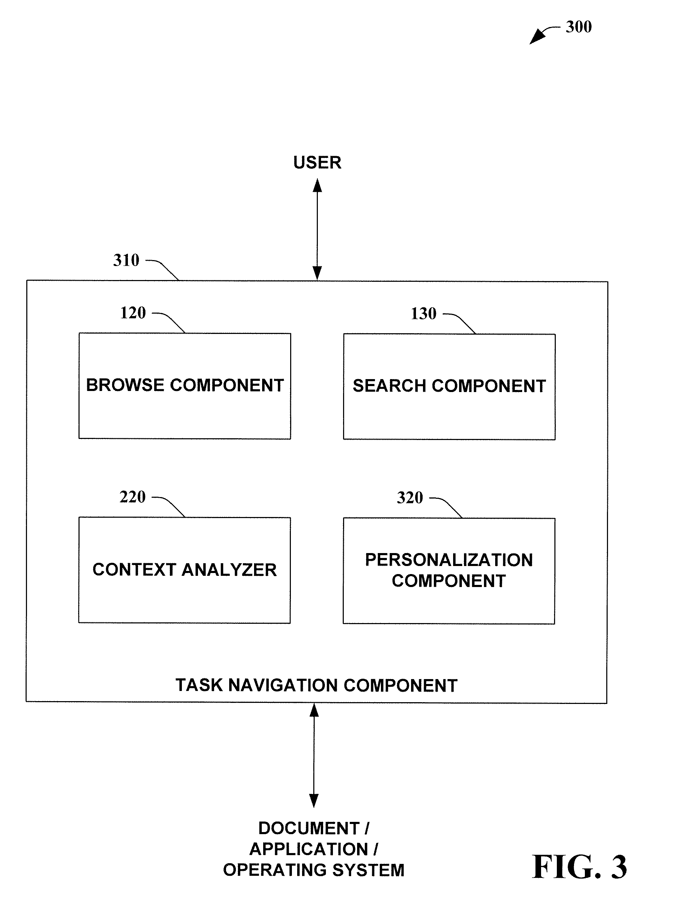

Turning to Fig. 3, illustrated is a system 300 that facilitates presenting tasks that can be effectuated with an application, document, operating system, *etc.* The system 300 includes a task navigation component 310, which comprises the browse component 120, the search component 130, the context analyzer 220, and a personalization component 320. The personalization component 320 is utilized to personalize the task navigation component 310 to the individual preferences and/or typical usage patterns of each user and/or application that employs the task navigation component 310.

According to an aspect, the personalization component 320 can maintain a history of tasks performed by a user. The history can be utilized with the browse component 120; thus, for example, a user can browse through the history of tasks performed. Additionally or alternatively, a user can employ the search component 130 to search for a task from the tasks in the history. The search component 130 can further be utilized to filter the tasks in the history, for example, by document, time, *etc*.

Furthermore, the personalization component 320 can enable a user to input a number of favorite tasks. For example, when the user discovers a task that can be accomplished with a document centric software application, the user can add the task to her favorites. The task can be added utilizing a mouse, keyboard, voice input, *etc.* The favorites can be browsed with the browse component 120 and/or searched with the search component 130. The browse component 120 and/or the search component 130 can utilize the favorite tasks to enable the user to quickly access these particular tasks, since a smaller number of tasks are browsed and/or searched.

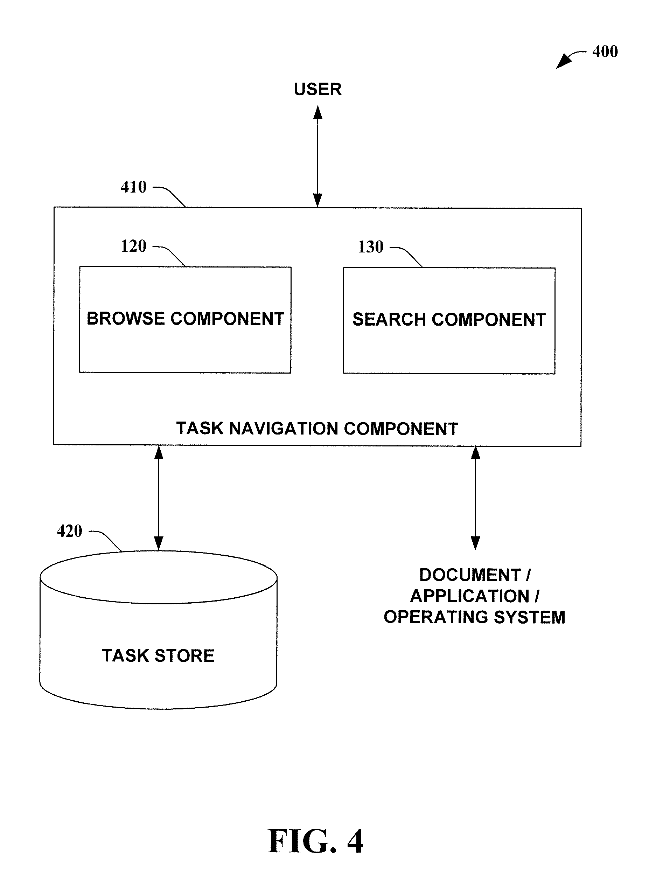

Fig. 4 illustrates a system 400 that facilitates identifying tasks that can be effectuated with a document(s), application(s), operating system(s), *etc*. The system 400 comprises a task navigation component 410 that includes a browse component 120 and a search component 130. The task navigation component 410 is coupled to a task store 420, which stores tasks associated with document(s), application(s), operating system(s), *etc.* According to an example, the task store 420 contains the tasks that an application (*e.g.*, document centric software application) can support.

The task store 420 can be utilized by the browse component 120 and/or the search component 130. For example, when a user performs a search utilizing the search component 130, the search component 130 queries the contents of the task store 420 to return tasks related to the search. Moreover, the tasks can be hierarchically stored in the task store 420. Alternatively, the tasks can be stored in clusters (*e.g.*, with subclusters of related tasks), tables, *etc.* and the browse component 120 can facilitate presenting the tasks in a hierarchy to the user. Furthermore, the tasks can be provided to the task store 420 when an application or operating system is manufactured or developed, when a document is created, when an application or operating system is installed, at runtime *(e.g., via* the task navigation component 410, ...), *etc.*

The task store 420 can be, for example, either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The task store 420 of the subject systems and methods is intended to comprise, without being limited to, these and any other suitable types of memory. The subject invention contemplates that the task store 420 can be part of the task navigation component 410, a separate component as depicted, or a combination thereof. Additionally, for example, the task store 420 can comprise a file and/or database that is stored on a hard disk and loaded into memory at execution time.

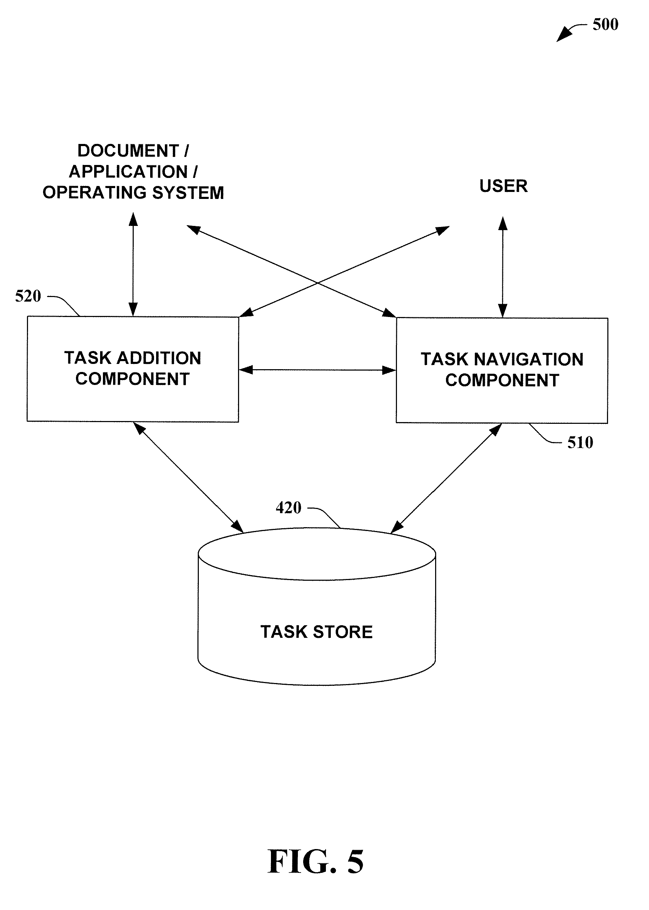

With reference to Fig. 5, depicted is a system 500 that enables adding tasks to a hierarchy of tasks that can be performed *via* an application (*e.g.*, document centric software application), document, operating system, *etc*. The system comprises a task navigation component 510 (*e.g.*, task navigation component 110, 210, 310, 410), the task store 420, and a task addition component 520. The task addition component 520 facilitates creating new tasks and/or providing the new tasks to the task store 420 to add the new tasks to the existing tasks in memory.

The task addition component 520 can be utilized to create new tasks. For example, the task addition component 520 can include a task editor, which can be employed by a user to author new tasks. By way of illustration, the user can utilize the task editor to combine existing tasks to generate new tasks. Thus, for example, the user can author a new task that imports a table and italicizes all of the text within the cells of the table. The task addition component 520 can additionally or alternatively add tasks upon installation of a new software component. For example, if a document centric software application is installed, new tasks can be provided to the task store 420 *via* the task addition component 520. These tasks can be provided by the task addition component 520 automatically or upon user selection of tasks to add; however, the subject invention is not so limited.

Moreover, the task addition component 520 can suggest new tasks to the user. For example, the task addition component 520 can analyze usage of the task navigation component 510 (*e.g.*, browse component 120, search component 130, context component 220, personalization component 320, ... ) and can suggest new tasks accordingly. In an exemplary embodiment, the task addition component 520 can suggest new tasks that are combinations of existing tasks. According to another aspect of the subject invention, the task addition component 520 can receive updates *(e.g., via* the Internet, media such as a compact disc, ...) for application(s) and/or operating system(s), which provide additional tasks that can be provided to the task store 420. Moreover, the new task can be categorized within the hierarchy *via* the user, the task addition component 520, the task navigation component 510 (*e.g.*, the browse component 120, ... ), the task store 420, *etc.*

According to a further example, the task addition component 520 can be utilized to create tasks and/or the original hierarchy by application developers and/or authors. Thus, the task addition component 520 can be employed as an authoring tool that allows for creating the hierarchy of tasks and assigning implementations to the tasks. Additionally or alternatively, a separate tool (*e.g.*, not accessible to users) can be utilized for generating the original hierarchy of tasks and assigning the implementation.

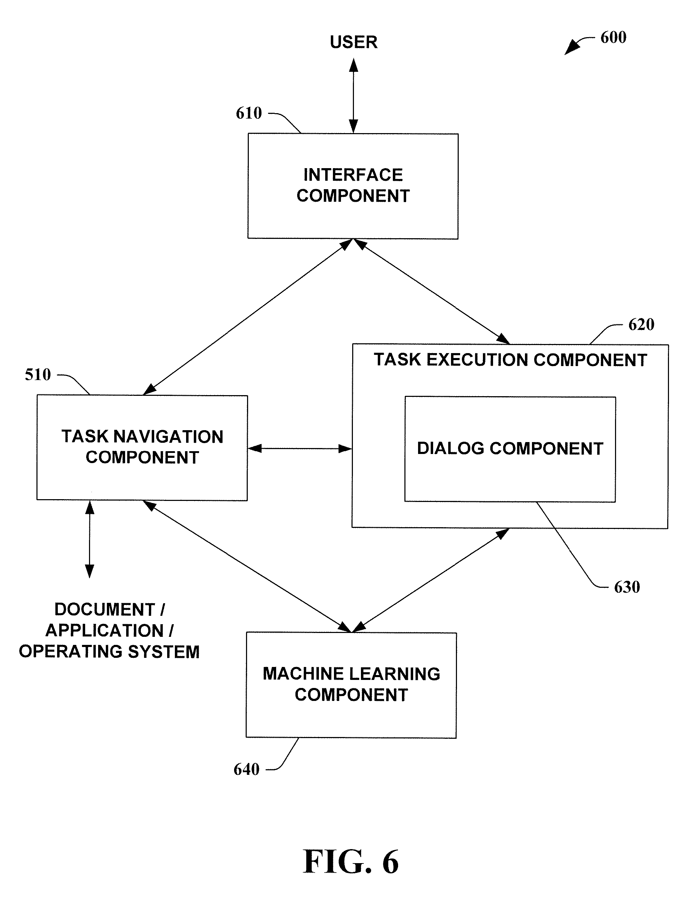

Fig. 6 illustrates a system 600 that navigates and/or performs tasks associated with a document, application (*e.g.*, document centric software application), operating system, *etc*. according to an aspect of the subject invention. The system 600 includes the task navigation component 510, an interface component 610, a task execution component 620 that comprises a dialog component 630, and a machine learning component 640. A user and/or an application can interact with the interface component 610. The interface component 610 can be, for example, a display, a mouse, a keyboard, a touch panel, a joystick, a sensor, a human machine interface, a device that enables a user to input and/or output information, or a combination thereof.

The interface component 610 is coupled to the task navigation component 510. Thus, the user can search and/or browse for tasks that can be performed with a document, application, operating system, *etc*. utilizing the task navigation component 510 *via* the interface component 610. By way of example, the user can employ a keyboard and a display to conduct a keyword search to identify a desired task with the task navigation component 510 *(e.g.,* search component 130, browse component 120, ...).

Additionally, the interface component 610 is coupled to the task execution component 620. The task execution component 620 effectuates the commands associated with the task upon it being selected. For example, the task can be selected by a user or by another application with the task execution component 620 *via* the interface component 610. The task can be chosen from received search results, history, favorites, context, while browsing, *etc*. obtained with the navigation component 510. According to an example, the task execution component 620 can automatically execute the commands associated with the task when the task is selected. Pursuant to another exemplary embodiment, the task execution component 620 can utilize the dialog component 630 to obtain additional information from a user and/or request the user to perform additional actions, *etc.* For example, the user can select a task that splits cells of a table. If there is only one table within the document, the task execution component 620 can select the table on which to perform the operation. However, the task execution component 620 needs to query the user about which cells of the table to split; thus, the dialog component 630 can be employed to request that the user select the cell(s) within the table to split.

Additionally, the task navigation component 510 (and/or the browse component 120, search component 130 and context analyzer 220 of Fig. 2, the personalization component 320 of Fig. 3, task addition component 520 of Fig. 5, ...) and/or the task execution component 620 can employ a machine learning component 640 in connection with navigating and/or executing tasks associated with a document centric software application. Machine learning refers to an area of artificial intelligence concerned with development of techniques that allow computers and/or programs to "learn." More particularly, machine learning can relate to methods for creating and/or modifying computer programs based at least in part upon an analysis of data set(s). Thus, the task navigation component 510 and/or the task execution component 620 can operate more efficiently over time as more contextual data, user history, application history, and the like is collected.

Furthermore, the machine learning component 640 can make inferences relating to determining tasks that can be accomplished and/or executing tasks associated therewith. As used herein, the terms to "infer" or "inference" refer generally to the process of reasoning about or inferring states of a system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. Thus, the task navigation component 510 (and/or the browse component 120, search component 130, context analyzer 220, personalization component 320, task addition component 520, ...), given particular contextual data, can make inferences relating to navigating and/or executing tasks that can be effectuated *via* a document centric software application.

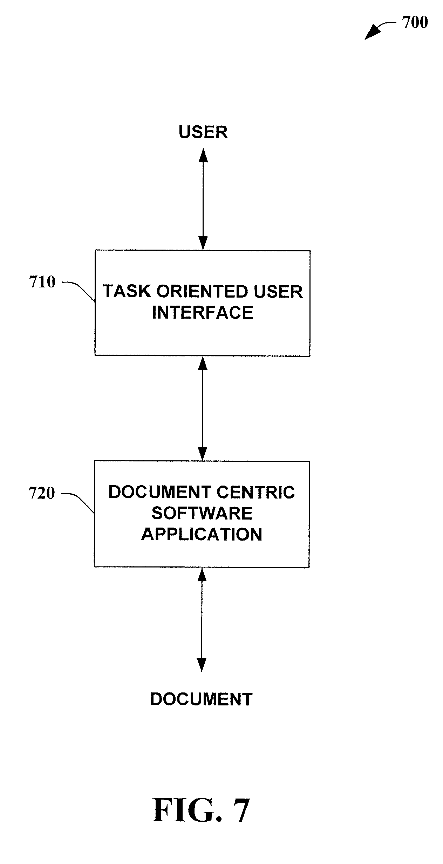

With reference to Fig. 7, illustrated is a system 700 that facilitates discovering and/or performing tasks that can be accomplished. The system 700 includes a task oriented user interface 710 and a document centric software application 720, which are coupled together. A user interacts with the task oriented user interface 710, which can provide the user with tasks that can be performed with the document centric software application 720. The task oriented user interface can employ navigation techniques (*e.g.*, *via* navigation component 110, browse component 120, search component 130, context analyzer 220, personalization component 320, ...) to yield tasks that the document centric software application 720 can execute. The tasks can be utilized to view and/or modify the document centric software application 720 and/or an associated document.

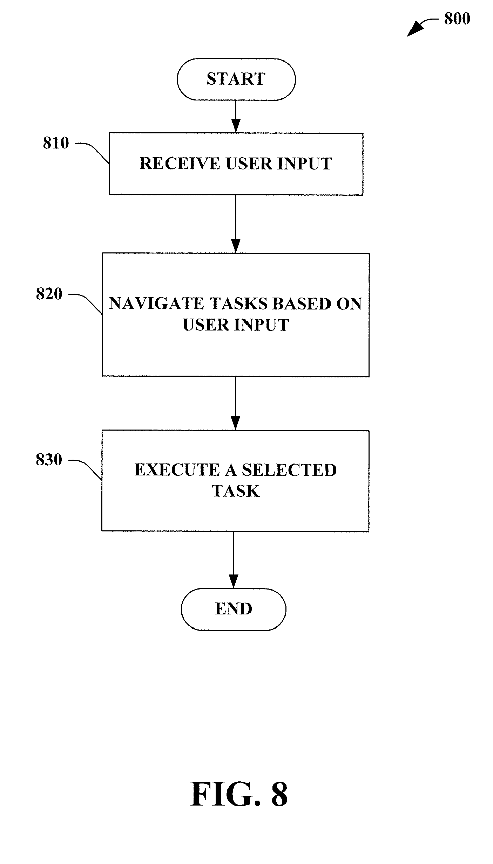

Figs. 8-10 illustrate methodologies in accordance with the subject invention. For simplicity of explanation, the methodologies are depicted and described as a series of acts. It is to be understood and appreciated that the subject invention is not limited by the acts illustrated and/or by the order of acts, for example acts can occur in various orders and/or concurrently, and with other acts not presented and described herein. Furthermore, not all illustrated acts may be required to implement the methodologies in accordance with the subject invention. In addition, those skilled in the art will understand and appreciate that the methodologies could alternatively be represented as a series of interrelated states *via* a state diagram or events.

Fig. 8 illustrates a methodology 800 that facilitates discovering and/or executing tasks that can be performed with an application (*e.g.*, document centric software application), operating system, *etc*. At 810, a user input is received. The user input is related to a search and/or browse request. At 820, tasks are navigated based on the user input. For example, the tasks can be browsed, search, *etc*. According to an aspect of the subject invention, a user can input a keyword search, natural language search, and/or speak and thus, a number of tasks that are related to the search criteria can be returned to the user. The search can be performed over all of the tasks that an application or applications can accomplish, or over a subset thereof. Alternatively or additionally, a user can browse through a hierarchy of tasks that are presented to the user. The hierarchy can be traversed utilizing, for example, a back button, a forward button, a number of portals, links, *etc*. Pursuant to another exemplary aspect, the tasks can be navigated in part based on a current context associated with a document and/or an application (*e.g.*, user, object selected, application utilized, ...). Moreover, the tasks can be navigated based on criteria personalized to a particular user such as, for example, favorites, history, probability of use of a certain task, *etc*. Additionally, the task is executed at 830. The task can be performed automatically or with user assistance. Furthermore, initiation of the task can be accomplished with or without user input.

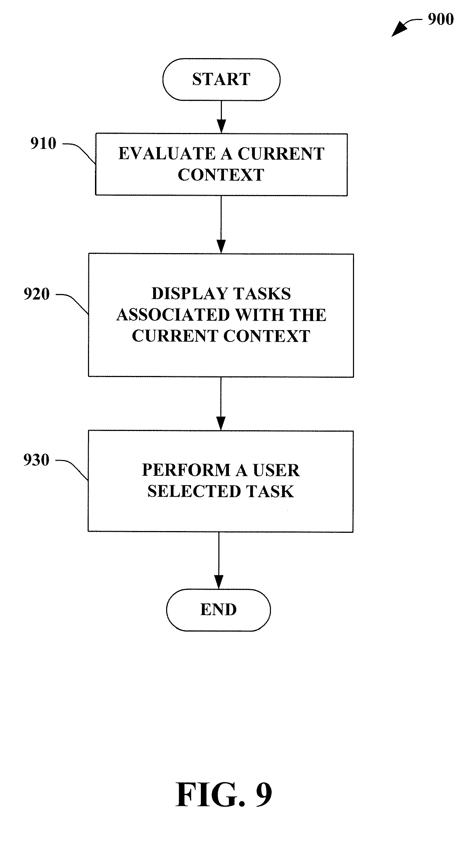

Turning to Fig. 9, illustrated is a methodology 900 that facilitates presenting and/or performing tasks according to an aspect of the subject invention. At 910, a current context is evaluated. For example, a user(s), application(s), document(s), object(s) selected within a document, *etc*. can be considered. At 920, tasks associated with the current context are displayed. Thus, the tasks that are displayed can be relevant to a selected object (*e.g.*, slide, table, image, ...) within a document. For example, if a user selects a table, she would be presented with tasks that are applicable to the table. At 930, a task that is selected is performed upon a document and/or an application (*e.g.*, document centric software application).

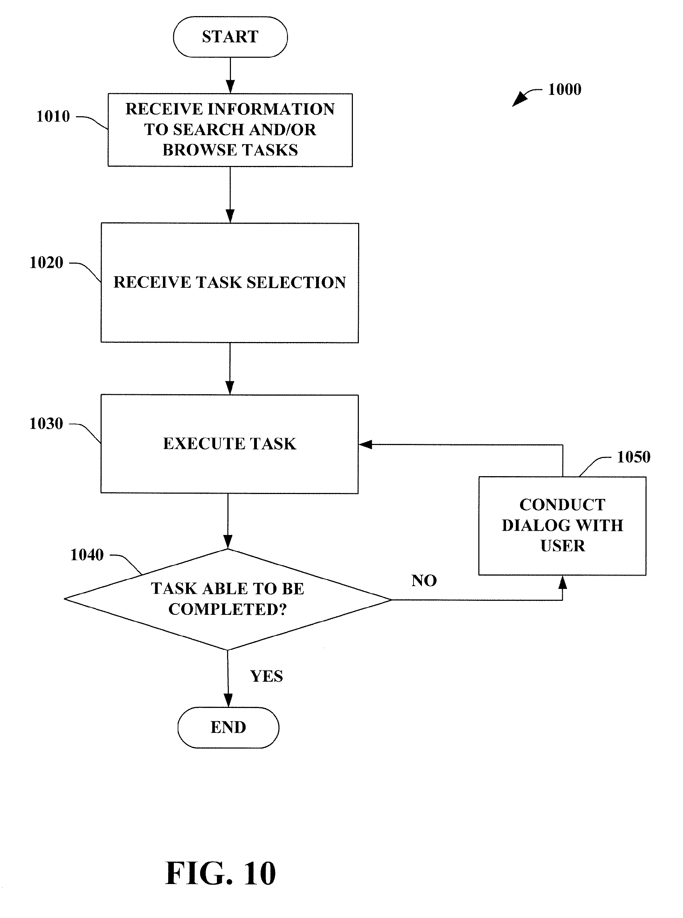

Fig. 10 illustrates a methodology 1000 that facilitates navigating and/or executing tasks with an application (*e.g.*, document centric software application), operating system, document, *etc*. in accordance with an aspect of the subject invention. At 1010, information is received related to searching and/or browsing tasks. For example, the information can be related to the performance of a search and can be utilized to generate the search results. For illustrative purposes, the search can be performed over all of the tasks or a subset of the tasks that can be accomplished. Additionally or alternatively, the information can be utilized to browse a hierarchy of tasks. The hierarchy can be stored in a task store (*e.g.*, task store 420 (Fig. 4)) and/or can be generated at the time of browsing. At 1020, a task selection is received. A particular task is selected by the user, which the user desires to have performed. At 1030, the task begins to be executed, such that a portion or all of the actions are performed. At 1040, it is determined whether or not it is possible to complete the task without querying the user or requiring the user to perform an action. If the task is unable to be completed, then a dialog is conducted with the user at 1050. The dialog can request that the user provide information, perform an action, *etc.* After the dialog is completed, the methodology returns to 1030 to execute the task. If no additional querying and/or action is necessary and the task is able to be completed, then the methodology 1000 is finished.

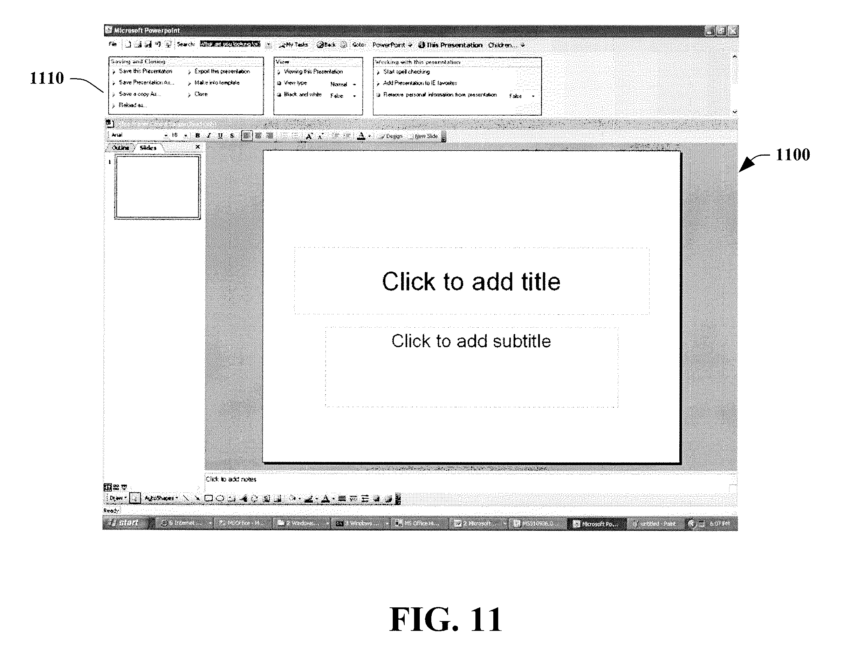

Fig. 11 is a screen shot of a task oriented user interface 1100 employed in connection with a document centric software application. This task oriented user interface 1100 depicts a new presentation. According to an aspect of the subject invention, the current context (*e.g.*, the new presentation) can be determined. Based on the current context, the user interface can display tasks that are relevant to the current context in ribbon 1110. Thus, pursuant to this example, the items included in the ribbon 1120 relate to the new presentation.

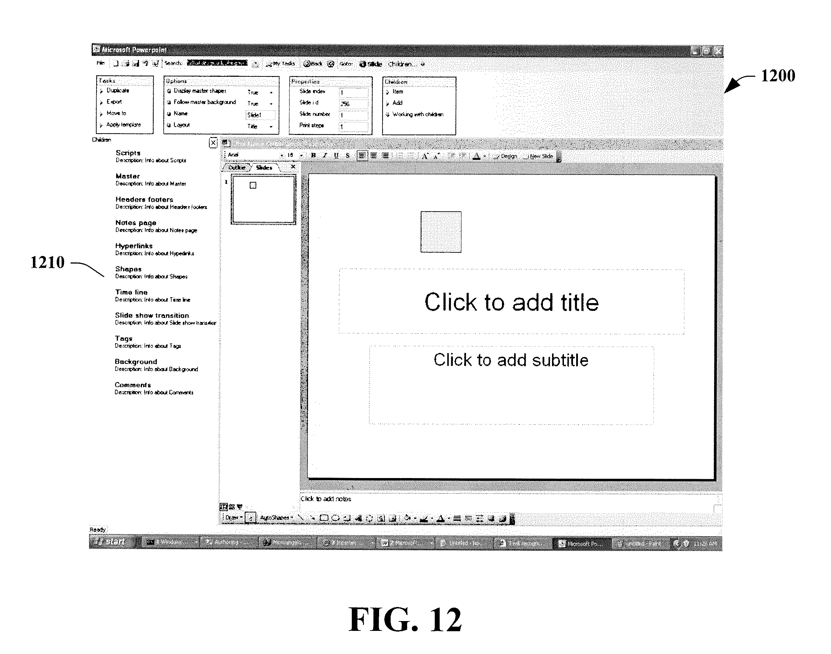

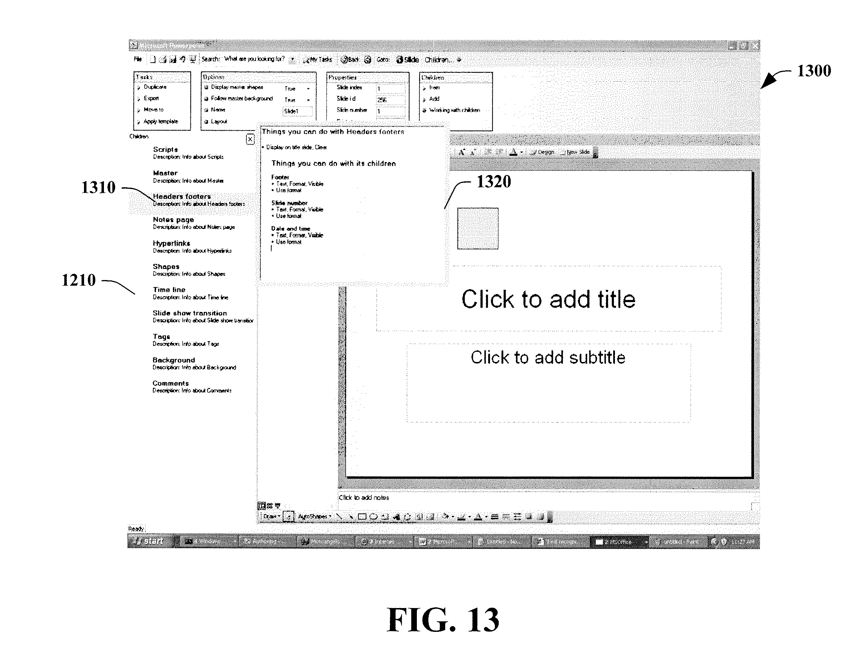

Turning to Fig. 12, illustrated is a screen shot of a task oriented user interface 1200 that facilitates navigating a hierarchy of tasks in a discoverable way according to an aspect of the subject invention. User interface 1200 depicts an exemplary situation where a user has selected a task entitled "Working with objects and properties of the current slide." Upon such selection, a panel 1210 on the left of the user interface 1200 appears and displays disparate objects and properties of the current slide along with information about each. With reference to Fig. 13, a screen shot of a task oriented user interface 1300 that facilitates discovering tasks is depicted. Similar to the user interface 1200 (Fig. 12), the user interface 1300 illustrates the panel 1210 containing the objects and/or properties. A user can utilize an input device to hover over an item 1310 in the panel 1210 (*e.g.*, position a cursor *via* a mouse, ...), which facilitates displaying a preview pane 1320. The preview pane 1320, for example, can present tasks that are possible if a user traverses down a path of the particular item 1310 over which the user is hovering. In the exemplary screen shot, the displayed preview pane 1320 relates to headers and footers and presents tasks that exist within that segment of the hierarchy. Accordingly, preview pane 1320 enhances discoverability of tasks that can be performed.

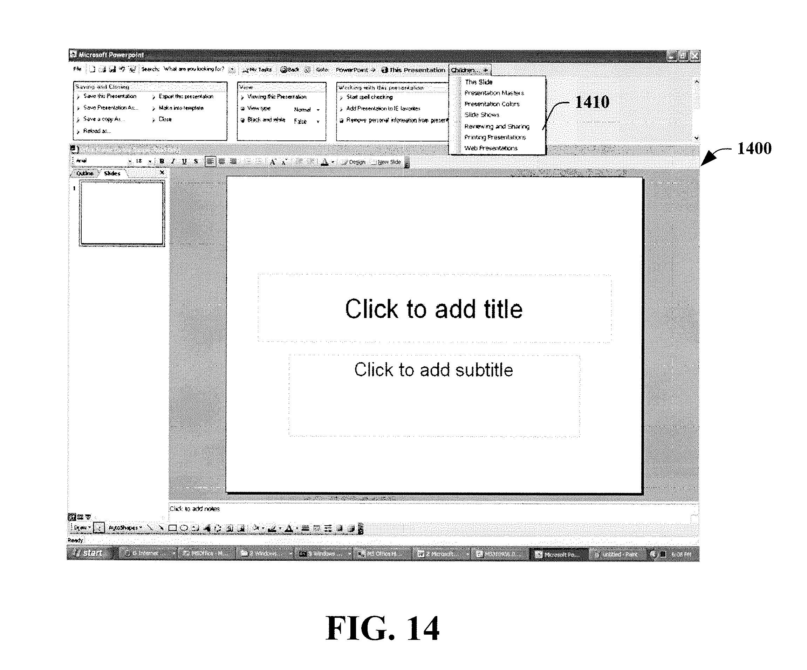

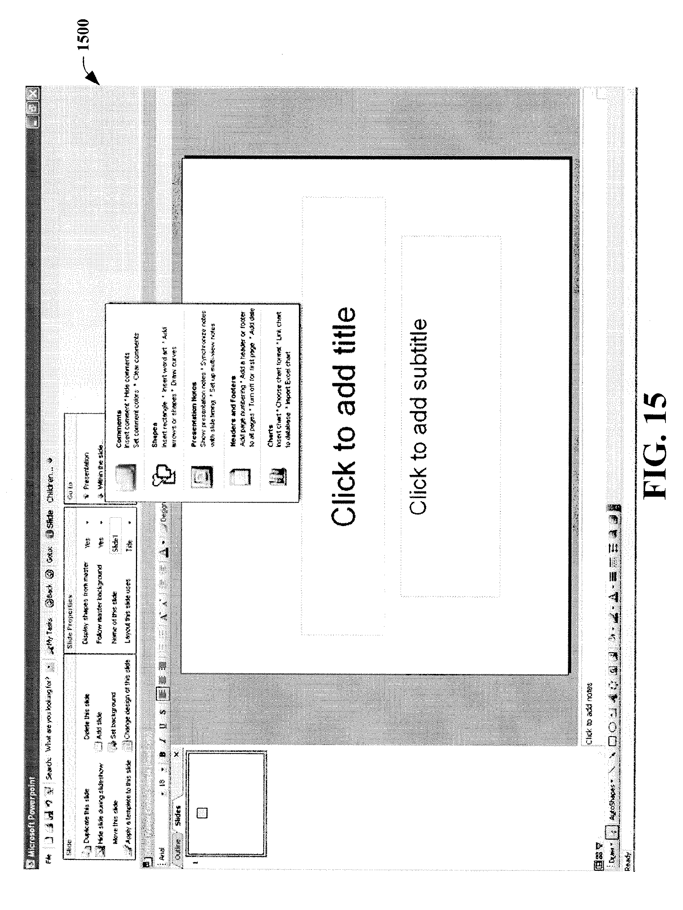

Fig. 14 is a screen shot of a task oriented user interface 1400 according to one or more aspects of the subject invention. The task oriented user interface 1400 can include a breadcrumb 1410 that is utilized for efficient navigation of a hierarchy of tasks that can be performed *via* a document centric software application. Turning to Fig. 15, illustrated is a screen shot of a task oriented user interface 1500 according to one or more aspects of the subject invention. The user interface 1500 demonstrates a hierarchy of tasks that can be accomplished with a document centric software application.

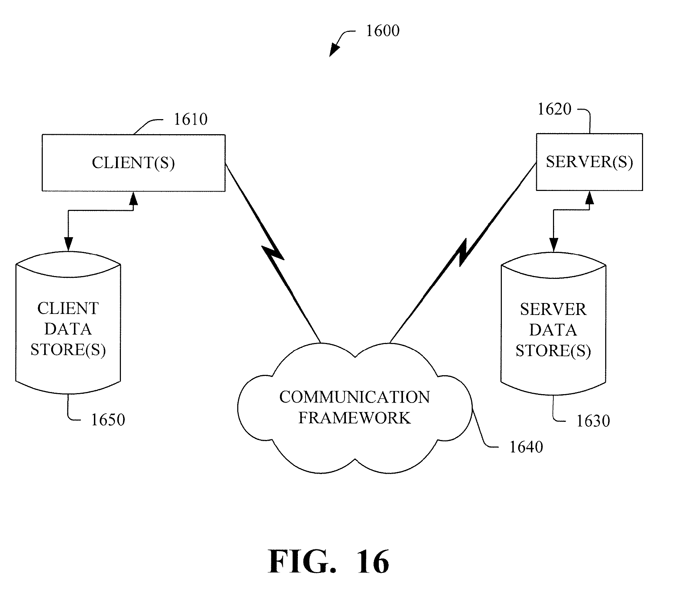

In order to provide additional context for implementing various aspects of the subject invention, Figs 16-17 and the following discussion is intended to provide a brief, general description of a suitable computing environment in which the various aspects of the subject invention may be implemented. While the invention has been described above in the general context of computer-executable instructions of a computer program that runs on a local computer and/or remote computer, those skilled in the art will recognize that the invention also may be implemented in combination with other program modules. Generally, program modules include routines, programs, components, data structures, etc., that perform particular tasks and/or implement particular abstract data types.

Moreover, those skilled in the art will appreciate that the inventive methods may be practiced with other computer system configurations, including single-processor or multi-processor computer systems, minicomputers, mainframe computers, as well as personal computers, hand-held computing devices, microprocessor-based and/or programmable consumer electronics, and the like, each of which may operatively communicate with one or more associated devices. The illustrated aspects of the invention may also be practiced in distributed computing environments where certain tasks are performed by remote processing devices that are linked through a communications network. However, some, if not all, aspects of the invention may be practiced on stand-alone computers. In a distributed computing environment, program modules may be located in local and/or remote memory storage devices.

Fig. 16 is a schematic block diagram of a sample-computing environment 1600 with which the subject invention can interact. The system 1600 includes one or more client(s) 1610. The client(s) 1610 can be hardware and/or software (e.g., threads, processes, computing devices). The system 1600 also includes one or more server(s) 1620. The server(s) 1620 can be hardware and/or software (e.g., threads, processes, computing devices). The servers 1620 can house threads to perform transformations by employing the subject invention, for example.

One possible communication between a client 1610 and a server 1620 can be in the form of a data packet adapted to be transmitted between two or more computer processes. The system 1600 includes a communication framework 1640 that can be employed to facilitate communications between the client(s) 1610 and the server(s) 1620. The client(s) 1610 are operably connected to one or more client data store(s) 1650 that can be employed to store information local to the client(s) 1610. Similarly, the server(s) 1620 are operably connected to one or more server data store(s) 1630 that can be employed to store information local to the servers 1640.

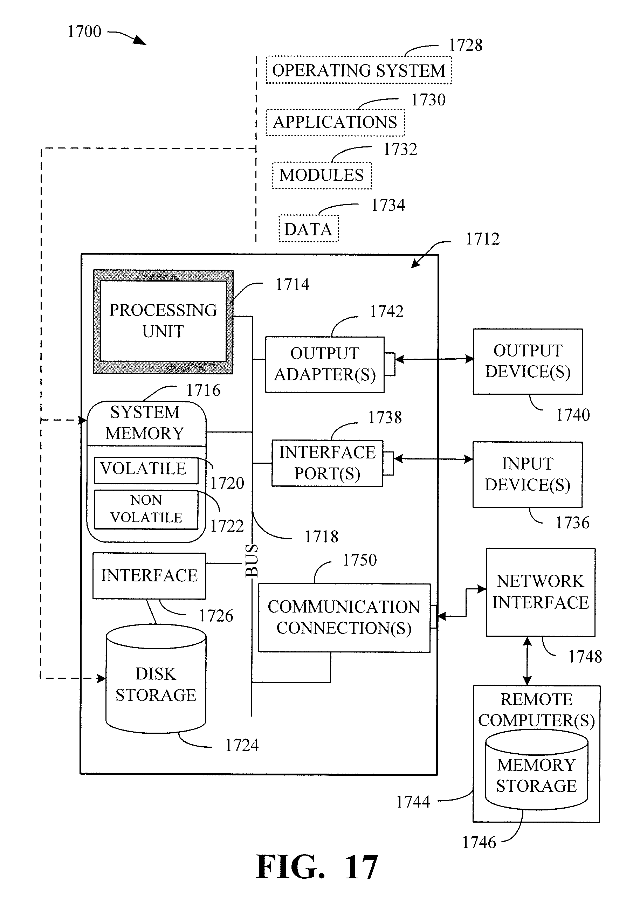

With reference to Fig. 17, an exemplary environment 1700 for implementing various aspects of the invention includes a computer 1712. The computer 1712 includes a processing unit 1714, a system memory 1716, and a system bus 1718. The system bus 1718 couples system components including, but not limited to, the system memory 1716 to the processing unit 1714. The processing unit 1714 can be any of various available processors. Dual microprocessors and other multiprocessor architectures also can be employed as the processing unit 1714.

The system bus 1718 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 1716 includes volatile memory 1720 and nonvolatile memory 1722. The basic input/output system (BIOS), containing the basic routines to transfer information between elements within the computer 1712, such as during start-up, is stored in nonvolatile memory 1722. By way of illustration, and not limitation, nonvolatile memory 1722 can include read only memory (ROM), programmable ROM (PROM), electrically programmable ROM (EPROM), electrically erasable ROM (EEPROM), or flash memory. Volatile memory 1720 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1712 also includes removable/non-removable, volatile/non-volatile computer storage media. Fig. 17 illustrates, for example a disk storage 1724. Disk storage 1724 includes, but is not limited to, devices like a magnetic disk drive, floppy disk drive, tape drive, Jaz drive, Zip drive, LS-100 drive, flash memory card, or memory stick. In addition, disk storage 1724 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1724 to the system bus 1718, a removable or non-removable interface is typically used such as interface 1726.

It is to be appreciated that Fig. 17 describes software that acts as an intermediary between users and the basic computer resources described in the suitable operating environment 1700. Such software includes an operating system 1728. Operating system 1728, which can be stored on disk storage 1724, acts to control and allocate resources of the computer system 1712. System applications 1730 take advantage of the management of resources by operating system 1728 through program modules 1732 and program data 1734 stored either in system memory 1716 or on disk storage 1724. It is to be appreciated that the subject invention can be implemented with various operating systems or combinations of operating systems.

A user enters commands or information into the computer 1712 through input device(s) 1736. Input devices 1736 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1714 through the system bus 1718 via interface port(s) 1738. Interface port(s) 1738 include, for example, a serial port, a parallel port, a game port, and a universal serial bus (USB). Output device(s) 1740 use some of the same type of ports as input device(s) 1736. Thus, for example, a USB port may be used to provide input to computer 1712, and to output information from computer 1712 to an output device 1740. Output adapter 1742 is provided to illustrate that there are some output devices 1740 like monitors, speakers, and printers, among other output devices 1740, which require special adapters. The output adapters 1742 include, by way of illustration and not limitation, video and sound cards that provide a means of connection between the output device 1740 and the system bus 1718. It should be noted that other devices and/or systems of devices provide both input and output capabilities such as remote computer(s) 1744.

Computer 1712 can operate in a networked environment using logical connections to one or more remote computers, such as remote computer(s) 1744. The remote computer(s) 1744 can be a personal computer, a server, a router, a network PC, a workstation, a microprocessor based appliance, a peer device or other common network node and the like, and typically includes many or all of the elements described relative to computer 1712. For purposes of brevity, only a memory storage device 1746 is illustrated with remote computer(s) 1744. Remote computer(s) 1744 is logically connected to computer 1712 through a network interface 1748 and then physically connected via communication connection 1750. Network interface 1748 encompasses wire and/or wireless communication networks such as local-area networks (LAN) and wide-area networks (WAN). LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1750 refers to the hardware/software employed to connect the network interface 1748 to the bus 1718. While communication connection 1750 is shown for illustrative clarity inside computer 1712, it can also be external to computer 1712. The hardware/software necessary for connection to the network interface 1748 includes, for exemplary purposes only, internal and external technologies such as, modems including regular telephone grade modems, cable modems and DSL modems, ISDN adapters, and Ethernet cards.

What has been described above includes examples of the subject invention. It is, of course, not possible to describe every conceivable combination of components or methodologies for purposes of describing the subject invention, but one of ordinary skill in the art may recognize that many further combinations and permutations of the subject invention are possible. Accordingly, the subject invention is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention.

In addition, while a particular feature of the invention may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

## Claims

1. A system that facilitates utilizing a document centric software application, comprising:
an interface component that receives an input from a user; and
a task navigation component with a hierarchical based index of tasks that are capable of being accomplished with the document centric software application, wherein the input is utilized to traverse the index and the tasks are executed directly from the index.

2. The system of claim 1, the navigation component comprises at least one of a browse component that facilitates browsing the hierarchical based index of tasks and a search component that facilitates searching for tasks that can be accomplished with the document centric software application.

3. The system of claim 2, the browse component facilitates displaying types of tasks located down a path within the hierarchical based index and comprises at least one of an application portal, a link, a back button, and a forward button.

4. The system of claim 2, the search component searches over at least one task capable of being performed.

5. The system of claim 2, the search component utilizes at least one of keyword searching, natural language searching, and speech.

6. The system of claim 1, further comprising a context analyzer that evaluates a current context determined based in part on at least one of an application employed, an identify of a user, and an object selected, the current context is utilized by the navigation component to identify relevant tasks.

7. The system of claim 1, further comprising a personalization component that personalizes the navigation component based in part on criteria related to a particular user, the criteria is based on at least one of a history of tasks and favorite tasks.

8. The system of claim 1, further comprising a task addition component that adds tasks to the hierarchical based index.

9. The system of claim 8, the task addition component utilizes a text editor to author tasks.

10. The system of claim 8, the task addition component suggests tasks to add to the hierarchical based index based on at least one of previous usage of the navigation component, a newly installed application, a received task update, and prior tasks effectuated.

11. The system of claim 1, further comprising a task execution component that effectuates commands associated with a selected task.

12. The system of claim 1, further comprising a dialog component that communicates with a user regarding accomplishing a task when additional information is needed from the user.

13. The system of claim 1, the hierarchical based index of tasks comprises a task that is located in more than one location within the index.

14. A method that facilitates discovering tasks that an application is capable of performing, comprising:
receiving an input from a user;
navigating a hierarchy of tasks associated with a document centric software application based in part on the user input, wherein the tasks are directly executed from the hierarchy; and
displaying a selectable subset of tasks to the user.

15. The method of claim 14, further comprising performing a selected task from the subset of tasks.

16. The method of claim 15, automatically performing the selected task.

17. The method of claim 14, dialoging with the user when an additional action is needed of the user.

18. The method of claim 14, navigating the hierarchy comprises at least one of searching for tasks within the hierarchy and browsing for tasks within the hierarchy.

19. The method of claim 14, further comprising at least one of identifying a current context, which is utilized to facilitate navigating the hierarchy and adding tasks to the hierarchy of tasks.

20. A system for determining tasks to execute related to a document centric software application, comprising:
means for generating a hierarchy of tasks capable of being accomplished related to at least one of a document and a document centric software application;
means for navigating the hierarchy of tasks; and
means for directly executing a selected task from the hierarchy of tasks.
